# DEMANDE DE BREVET EUROPEEN

(11) **EP 3 992 728 A1**
(43) Date de publication de la demande: **04.05.2022**
(21) Numéro de dépôt: 20204744.5
(22) Date de dépôt: 29.10.2020
(51) Int. Cl.: G04B 17/04, F16C 11/12

(54) **GUIDAGE FLEXIBLE AVEC TABLE DE TRANSLATION POUR MECANISME RESONATEUR ROTATIF, NOTAMMENT D'UN MOUVEMENT D'HORLOGERIE**

(71) Demandeur: The Swatch Group Research and Development Ltd, 2074 Marin (CH)
(72) Inventeur: KAHROBAIYAN, Mohammad Hussein, 2000 Neuchâtel (CH); WINKLER, Pascal, 2072 St-Blaise (CH); HELFER, Jean-Luc, 2525 Le Landeron (CH); DI DOMENICO, Gianni, 2000 Neuchâtel (CH); MUSY, Grégory, 1052 Le Mont-sur-Lausanne (CH); COSANDIER, Florent, 2000 Neuchâtel (CH)
(74) Mandataire: ICB SA

(57) **Abrégé**

L'invention concerne un guidage flexible (1) pour un mécanisme résonateur rotatif, notamment d'un mouvement d'horlogerie, le guidage (1) comprenant un support fixe (2), un élément mobile (20) par rapport au support fixe (2), au moins une lame flexible principale (3, 4, 5) permettant à l'élément mobile (20) de se déplacer par rapport au support fixe (2) par flexion de la ou des lames flexibles principales (3, 4, 5) dans un mouvement rotatif autour d'un centre de rotation, le guidage flexible (1) étant agencé sensiblement dans un plan, et comprend au moins une table de translation (10, 11, 12) jointe à une extrémité de la lame flexible principale (3, 4, 5), la lame flexible principale (3, 4, 5) et la table de translation (10, 11, 12) formant un couple connecté soit au support fixe, soit à l'élément mobile (20), soit à une partie mobile intermédiaire, de sorte que la table de translation (10, 11, 12) soit configurée pour se déplacer en translation au moins en partie sous l'effet de la flexion de la lame flexible principale (3, 4, 5).

## Description

### Domaine de l'invention

La présente invention concerne un guidage flexible avec table de translation pour mécanisme résonateur rotatif, notamment d'un mouvement d'horlogerie. L'invention se rapporte encore à un mécanisme résonateur rotatif muni d'un tel guidage flexible.

### Arrière-plan de l'invention

La plupart des montres mécaniques actuelles sont munie d'un balancier-spiral et d'un mécanisme d'échappement à ancre suisse. Le balancier-spiral constitue la base de temps de la montre. On l'appelle aussi résonateur.

L'échappement, quant à lui, remplit deux fonctions principales:
- entretenir les va-et-vient du résonateur ;
- compter ces va-et-vient.

Pour constituer un résonateur mécanique, il faut un élément inertiel, un guidage et un élément de rappel élastique. Traditionnellement, un ressort spiral joue le rôle d'élément de rappel élastique pour l'élément inertiel que constitue un balancier. Ce balancier est guidé en rotation par des pivots qui tournent dans des paliers lisses en rubis. Cela donne lieu à des frottements, et donc à des pertes d'énergie et des perturbations de marche, qui dépendent des positions, et que l'on cherche à supprimer.

On utilise aujourd'hui des guidages flexibles comme ressort pour former un pivot virtuel. Les guidages flexibles à pivot virtuel permettent d'améliorer sensiblement les résonateurs horlogers. Les plus simples sont des pivots à lames croisées, composés de deux dispositifs de guidage à lames droites qui se croisent, en général perpendiculairement. Ces deux lames peuvent être, soit tridimensionnelles dans deux plans différents, soit bidimensionnelles dans un même plan et sont alors comme soudées à leur point de croisement.

Cependant, lorsqu'on veut utiliser des lames flexibles pour faire pivoter un balancier annulaire rotatif de manière semblable au mouvement d'un balancier avec un spiral, on n'arrive pas à obtenir un mouvement isochrone. En effet, on n'arrive pas à obtenir mouvement rotatif de la masse parfaitement périodique. Le couple de rappel n'est pas linéaire, ce qui engendre un anisochronisme en fonction de l'amplitude de déplacement de la masse et une erreur de marche du mouvement. De plus, l'axe de rotation de ces résonateurs n'est pas fixe et se déplace pendant que le balancier tourne. Ce mouvement parasite est faible, cependant, il affecte la marche du mouvement à cause du changement d'orientation de la montre par rapport à la gravité.

### Résumé de l'invention

Un but de l'invention est, par conséquent, de proposer un guidage flexible pour mécanisme résonateur rotatif, qui évite les problèmes précités.

A cet effet, l'invention concerne un guidage flexible pour un mécanisme résonateur rotatif, notamment d'un mouvement d'horlogerie, le guidage comprenant un support fixe, un élément mobile par rapport au support fixe, au moins une lame flexible principale permettant à l'élément mobile de se déplacer par rapport au support fixe par flexion de la ou des lames flexibles principales dans un mouvement rotatif autour d'un centre de rotation, le guidage flexible étant agencé sensiblement dans un plan.

Le guidage flexible est remarquable en ce qu'il comprend au moins une table de translation jointe à une extrémité de la lame flexible principale, la lame flexible principale et la table de translation formant un couple connecté soit au support fixe, soit à l'élément mobile, soit à une partie mobile intermédiaire, de sorte que la table de translation soit configurée pour se déplacer en translation au moins en partie sous l'effet de la flexion de la lame flexible principale.

Grâce à l'invention, on obtient un guidage à lames flexibles isochrone. En effet, la table de translation permet à la lame principale de se déplacer lorsqu'elle se courbe, et ainsi de conserver un coefficient de rappel sensiblement constant. Ainsi, le mouvement du balancier est isochrone. Un tel guidage flexible garantit un isochronisme du mouvement.

Selon une forme de réalisation avantageuse, le guidage comprend au moins trois couples, par exemple quatre, chaque couple étant formé d'une lame principale et d'une table de translation, les couples étant répartis angulairement, de manière à former un pivot symétrique, chaque lame principale étant jointe par une extrémité à une table de translation.

Selon une forme de réalisation avantageuse, la table de translation est agencée en série entre le support fixe et ladite lame flexible principale, la table de translation étant jointe au support fixe et à une première extrémité de la lame flexible principale, la lame flexible principale étant jointe à l'élément mobile par une seconde extrémité.

Selon une forme de réalisation avantageuse, la table de translation est agencée en série entre ladite lame flexible principale et l'élément mobile, la table de translation étant jointe à l'élément mobile et à la seconde extrémité de la lame flexible principale, la lame flexible principale étant jointe au support fixe par la première extrémité.

Selon une forme de réalisation avantageuse, le guidage comprend au moins six couples, de préférence huit, chaque couple étant formé d'une lame principale et d'une table de translation, les couples étant répartis angulairement autour d'une partie centrale, de manière à former un pivot symétrique, chaque lame principale étant jointe par une extrémité à la partie centrale, au moins trois couples étant joints au support fixe et au moins trois couples étant joints à l'élément mobile par la table de translation.

Selon une forme de réalisation avantageuse, les couples joints au support fixe et les couples joints à l'élément mobile sont répartis alternativement autour de partie centrale.

Selon une forme de réalisation avantageuse, l'élément mobile comprend la partie centrale du guidage, à laquelle les lames flexibles principales sont jointes.

Selon une forme de réalisation avantageuse, le support fixe comprend une partie centrale du guidage, à laquelle les lames flexibles principales sont jointes.

Selon une forme de réalisation avantageuse, le guidage comprend une la partie centrale formant un élément intermédiaire entre le support et l'élément mobile, à laquelle les lames flexibles principales sont jointes.

Selon une forme de réalisation avantageuse, la table de translation comprend au moins une lame flexible secondaire et une partie rigide, la lame flexible secondaire étant jointe par une extrémité à la partie rigide, et par une autre extrémité, soit au support fixe, soit à l'élément mobile, soit à la partie centrale.

Selon une forme de réalisation avantageuse, la table de translation comprend deux lames flexibles secondaires jointes à une même face de la partie rigide.

Selon une forme de réalisation avantageuse, la table de translation comprend au moins deux lames flexibles secondaires, les lames flexibles secondaires étant jointes par une extrémité à la lame flexible principale, et par une autre extrémité, soit au support fixe, soit à l'élément mobile, soit à la partie centrale.

Selon une forme de réalisation avantageuse, les lames flexibles secondaires sont disposées sur des lignes différentes.

Selon une forme de réalisation avantageuse, les lames flexibles secondaires sont sensiblement parallèles.

Selon une forme de réalisation avantageuse, la partie rigide forme un coude de sorte que la ou les lames flexibles principales soient sensiblement perpendiculaires à la ou aux lames flexibles secondaires de la table de translation jointe à la lame flexible principale en position de repos du guidage.

Selon une forme de réalisation avantageuse, l'élément mobile comprend un balancier, qui est par exemple centré sur la partie centrale.

L'invention se rapporte aussi à un mécanisme résonateur rotatif, notamment pour mouvement horloger, le mécanisme comportant un guidage flexible selon l'invention.

### Description sommaire des dessins

D'autres caractéristiques et avantages de la présente invention apparaîtront à la lecture de plusieurs formes de réalisation données uniquement à titre d'exemples non limitatifs, en référence aux dessins annexés dans lesquels :
- la figure 1 représente schématiquement une vue de dessus d'un guidage flexible selon un premier mode de réalisation de l'invention,
- la figure 2 représente schématiquement une vue de dessus du guidage flexible avec un balancier selon le premier mode de réalisation de l'invention,
- la figure 3 représente schématiquement une vue de dessus d'un guidage flexible selon une variante du premier mode de réalisation de l'invention,
- la figure 4 représente schématiquement une vue de dessus d'un guidage flexible selon un deuxième mode de réalisation de l'invention,
- la figure 5 représente schématiquement une vue de dessus d'un guidage flexible selon un troisième mode de réalisation de l'invention,
- la figure 6 représente schématiquement une vue de dessus du guidage flexible avec un balancier selon le troisième mode de réalisation de l'invention,
- la figure 7 représente schématiquement une vue de dessus d'un guidage flexible selon un quatrième mode de réalisation de l'invention,
- la figure 8 représente schématiquement une vue en partie désassemblée du guidage flexible selon le quatrième mode de réalisation de l'invention
- la figure 9 représente schématiquement une vue de dessus d'un guidage flexible selon un cinquième mode de réalisation de l'invention,
- la figure 10 représente schématiquement une vue de dessus d'une table de translation selon une première variante de l'invention,
- la figure 11 représente schématiquement une vue de dessus d'une table de translation selon une deuxième variante de l'invention,
- la figure 12 représente schématiquement une vue de dessus d'une table de translation selon une troisième variante de l'invention,
- la figure 13 représente schématiquement une vue de dessus de deux variantes de réalisation de lames flexibles, et
- la figure 14 représente schématiquement une vue de dessus d'un agencement flexible selon l'invention.

### Description détaillée de modes de réalisation préférés

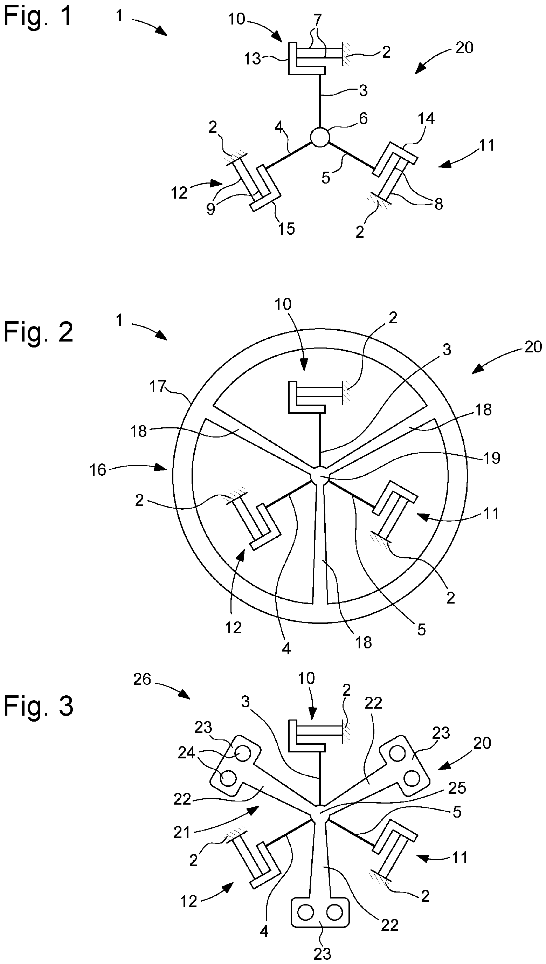

Sur les figures 1 à 3, est représenté un premier mode de réalisation d'un guidage flexible 1 pour un mécanisme résonateur rotatif, notamment d'un mouvement d'horlogerie. Le guidage flexible 1 est agencé sensiblement dans un plan. Le guidage flexible comprend un support fixe 2, un élément mobile 20 par rapport au support fixe 2 et trois lames flexibles principales 3, 4, 5 reliant chacune l'élément mobile 20 au support 2. Les lames flexibles principales 3, 4, 5 permettent à l'élément mobile 20 de se déplacer par rapport au support fixe 2. Par flexion des lames flexibles principales 3, 4, 5, l'élément mobile 20 peut se déplacer par rapport au support 2 dans un mouvement rotatif sur lui-même autour d'un centre de rotation. Les lames principales 3, 4, 5 sont, de préférence, de même longueur et réparties angulairement de manière uniforme autour d'une partie centrale 6 de l'élément mobile 20, de manière à former un pivot symétrique.

Selon l'invention, le guidage flexible 1 comprend des tables de translation 10, 11, 12, chaque table de translation étant jointe à une extrémité d'une lame flexible principales 3, 4, 5 différente. Dans ce mode de réalisation, la table de translation 10, 11, 12, est agencée en série entre le support fixe 2 et ladite lame flexible principale 3, 4, 5 correspondante. La table de translation 10, 11, 12, est jointe au support fixe 2 et à une première extrémité de la lame flexible principale 3, 4, 5 correspondante, la lame flexible principale 3, 4, 5 étant jointe à la partie centrale 6 par une seconde extrémité.

Ainsi, le guidage flexible 1 comprend trois couples, chaque couple étant formé d'une lame flexible principale 3, 4, 5 et d'une table de translation 10, 11, 12. Les couples sont répartis angulairement autour de la partie centrale 6, de manière à former un pivot symétrique, chaque lame principale 3, 4, 5 étant jointe par une extrémité à la partie centrale 6 et la table de translation 10, 11, 12 étant jointe au support fixe 2. Les couples, notamment les lames principales 3, 4, 5, forment un angle d'environ 120° entre eux. La partie centrale 6 est par exemple une portion de cylindre circulaire. Dans ce mode de réalisation, l'élément mobile 20 comprend la partie centrale 6.

Chaque table de translation 10, 11, 12 est configurée pour se déplacer en translation au moins en partie sous l'effet du mouvement de la lame flexible principale 3, 4, 5. Chaque table de translation 10, 11, 12 comprend au moins une lame flexible secondaire 7, 8, 9, ici deux lames flexibles secondaires 7, 8, 9, et une partie rigide 13, 14, 15. Les lames flexibles secondaires 7, 8, 9 sont jointes par une extrémité à la partie rigide 13, 14, 15, et par une autre extrémité au support fixe 2. Les lames flexibles secondaires 7, 8, 9 sont sensiblement parallèles et sont disposées sur des lignes différentes. De préférence, les lames flexibles secondaires 7, 8, 9 sont jointes à une même face de la partie rigide 13, 14, 15. La partie rigide 13, 14, 15 forme ici un coude en angle droit, le coude comportant deux segments sensiblement perpendiculaire. La lame flexible principale 3, 4, 5, est jointe au premier segment, tandis que les lames secondaires 7, 8, 9 sont jointes au deuxième segment. Ainsi, les lames flexibles principales 3, 4, 5 sont sensiblement perpendiculaires aux lames flexibles secondaires 7, 8, 9 de la table de translation 10, 11, 12 en position repos du guidage 1. La position de repos est définie quand les lames principales 3, 4, 5 et secondaires 7, 8, 9 sont droites, donc non courbées.

Sur la figure 2, l'élément mobile 20 comprend en outre un balancier 16, qui est en forme d'anneau. Le balancier 16 comporte une partie annulaire 17 externe et des bras 18, ici trois bras, joignant la partie annulaire 17 à une jonction axiale 19 par rapport à la partie annulaire 17. Les bras 18 sont concentriques et de même longueurs. Le balancier 16 est assemblé sur la partie centrale 6 par la jonction 19. De préférence, la partie centrale 6 et la jonction 19 sont monoblocs. Ainsi, le balancier 16 est centré par rapport à la partie centrale 6. Dans cette variante, le balancier est formé d'une même matière, c'est-à-dire qu'il est monobloc.

Lorsque le balancier 16 est en mouvement, il suit, dans le plan du balancier 16, un mouvement de rotation périodique dans un sens, puis dans l'autre sens, autour d'un axe passant par la jonction 19 et la partie centrale 6. Les lames flexibles principales 3, 4, 5 se courbent et ont une fonction de ressort rappel du balancier 16 pour le faire tourner dans l'autre sens et réciproquement. Les tables de translation 10, 11, 12 permettent aux lames principales 3, 4, 5 de se déplacer longitudinalement en même temps qu'elles se courbent. Les parties rigides 13, 14, 15 des tables de translation 10, 11, 12 se rapprochent de la partie centrale 6 grâce aux lames secondaires 7, 8, 9 lorsque les lames principales 3, 4, 5 se courbent, et s'éloignent de la partie centrale 6 lorsque les lames principales 3, 4, 5 deviennent droites. Ainsi, on conserve un isochronisme du mouvement du balancier 16.

Dans la deuxième variante de guidage flexible 26 du premier mode de réalisation de la figure 3, l'élément mobile 20 comporte au moins deux organes. Le premier organe 21 comprend des bras 22, ici trois bras, et une jonction axiale 25 monoblocs. Les bras 22 sont dotés à leurs extrémités libres d'une plateforme d'attache 23 munie de trous 24 pour assembler un élément inertiel, telle une masselotte ou un anneau, l'élément inertiel définissant le deuxième organe du balancier 20 et n'étant pas représenté sur la figure 3. Les autres parties du guidage flexible 26 sont identiques à la première variante. De préférence, la partie centrale 6 et le premier organe 21 sont monoblocs.

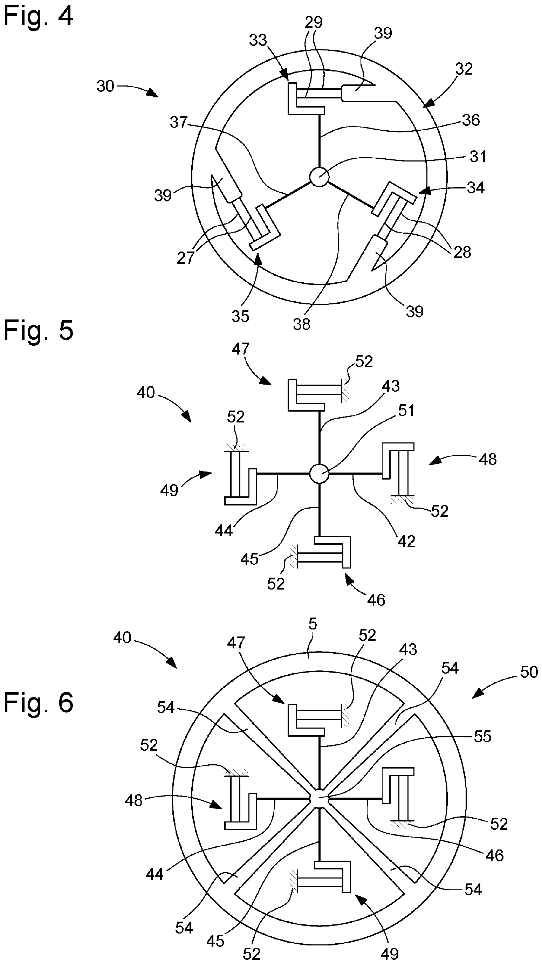

Le deuxième mode de réalisation de la figure 4 montre un exemple de guidage flexible 30 dans lequel les tables de translation 33, 34, 35 sont jointes à l'élément mobile 32, qui a une forme annulaire, de préférence. Le guidage flexible 30 comprend un support fixe 31, un élément mobile 32, et trois couples formés d'une lame flexible principale 36, 37, 38 d'une table de translation 33, 34, 35. Chaque table de translation 33, 34, 35 est agencée en série entre une lame flexible principale 36, 37, 38 et l'élément mobile 32. Chaque lame flexible principale 36, 37, 38 est jointe au support fixe 31 par une première extrémité. La table de translation 33, 34, 35 est jointe à la partie annulaire de l'élément mobile 32 et à la seconde extrémité de la lame flexible principale 36, 37, 38. Dans ce mode de réalisation, le support fixe 31 comprend la partie centrale sur laquelle sont jointes les premières extrémités des lames flexibles principales 36, 37, 38. La partie centrale a aussi une forme de portion cylindrique, de préférence circulaire. De préférence, l'élément mobile 32 comporte trois extensions internes 39 orientées dans le plan vers l'intérieure de l'anneau, afin de permettre l'assemblage des lames flexibles secondaires 27, 28, 29 de chaque table de translation 33, 34, 35. Les lames flexibles secondaires 27, 28, 29 sont sensiblement parallèles et sont disposées sur des lignes différentes. De préférence, les lames flexibles secondaires 27, 28, 29 sont jointes à une même face de la partie rigide. Les extensions 39 s'étendent selon une direction sensiblement perpendiculaire à la direction des lames flexibles principales 36, 37, 38 en position de repos, de sorte que les lames flexibles secondaires 27, 28, 29 soient dirigées selon cette direction. Ainsi, les lames flexibles secondaires 27, 28, 29 sont sensiblement perpendiculaires à la direction des lames flexibles principales 36, 37, 38. Dans ce mode de réalisation, les tables de translation 33, 34, 35 ne pas sont jointes directement au support fixe 31, mais à l'élément mobile 32. L'effet obtenu est le même que dans le premier mode de réalisation, notamment concernant l'isochronisme du mouvement du balancier 32.

Le troisième mode de réalisation d'un guidage flexible 40 des figures 5 et 6 est semblable au premier mode de réalisation, mais il comprend quatre couples formés d'une table de translation 46, 47, 48, 49 et d'une lame flexible principale 42, 43, 44, 45, en plus de l'élément mobile 50 et du support fixe 52. Les quatre couples permettent d'avoir une symétrie du guidage tous les 90°, notamment pour répondre aux propriétés des matériaux anisotropes, qui peuvent servir à la fabrication du guidage. Les propriétés du matériau changent périodiquement selon l'orientation, par exemple tous les 90° pour le silicium. Les couples sont répartis angulairement autour de la partie centrale 51 de l'élément mobile 50 pour former un pivot symétrique. Les couples, notamment les lames flexibles principales 42, 43, 44, 45, forment un angle sensiblement perpendiculaire entre eux, d'environ 90°. Comme dans le premier mode de réalisation, les quatre tables de translation 46, 47, 48, 49 sont agencées, chacune, entre une lame flexible principale 42, 43, 44, 45 et le support fixe 52. Chaque lame flexible principale 42, 43, 44, 45 est jointe à une table de translation 46, 47, 48, 49 par une extrémité, et à la partie centrale 51 par l'autre extrémité. L'élément mobile 50 comprend un balancier, de préférence annulaire 53, muni de quatre bras 54 se joignant en une jonction axiale 55. De préférence, la partie centrale 51, la jonction 55, la partie annulaire 53 et les bras 54 sont monoblocs.

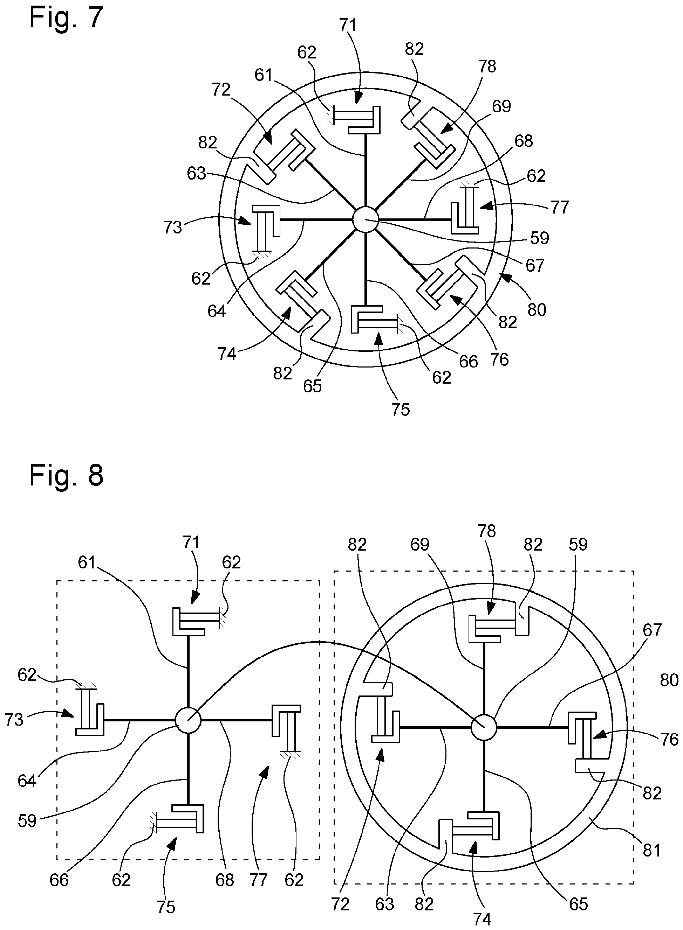

Les figure 7 et 8 montrent un quatrième mode de réalisation d'un guidage flexible 60 comprenant huit couples, chaque couple étant formé en série d'une lame flexible principale 61, 63, 64, 65, 66, 67, 68, 69 et d'une table de translation. Les couples 71-61, 72-63, 73-64, 74-65, 75-66, 76-67, 77-68, 78-69 sont répartis angulairement autour d'une partie centrale 59, de manière à former un pivot symétrique. Chaque lame flexible principale 61, 63, 64, 65, 66, 67, 68, 69 est jointe par une extrémité à la partie centrale 59. Quatre couples sont joints au support fixe 62 par les tables de translation 71, 73, 75, 77, et quatre couples sont joints au balancier 81 par les tables de translation 72, 74, 76, 78. La partie centrale 59 est mobile avec une forme de cylindre, circulaire de préférence, et forme un organe intermédiaire mobile entre le support 62 et l'élément mobile 80. L'élément mobile 80 comprend un balancier 81, en forme d'anneau de préférence, muni de quatre extensions 82 s'étendant vers l'intérieur de l'anneau. Les extensions 82 s'étendent de manière à être sensiblement orthogonales à la tangente de l'anneau pour que les lames secondaires des tables de translation 72, 74, 76, 78 et les lames principales 63, 65, 67, 69 soient sensiblement perpendiculaires.

Sur la figure 8, le guidage flexible 60 du quatrième mode de réalisation est coupé en deux parties. A gauche, une première partie comprend le support 62 et quatre couples 71-61, 73-64, 75-66, 77-68. Et à droite, une deuxième partie comprend quatre couples 72-63, 74-65, 76-67, 78-69 et le balancier 81. La partie centrale 59 est représentée sur les deux parties de la figure 8. En position assemblée, les deux parties sont superposées, la partie centrale 59 ne faisant qu'un. Ainsi, les deux parties s'étendent dans deux plans parallèles.

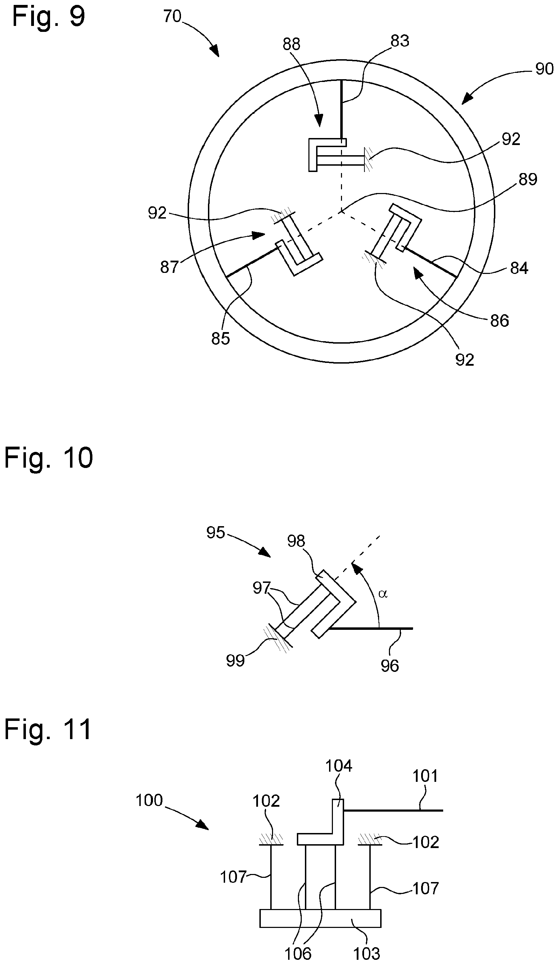

Le cinquième mode de réalisation du guidage flexible 70 de la figure 9 comprend des tables de translation 86, 87, 88 agencées au centre du guidage flexible 70. Le guidage flexible 70 comporte trois couples formés chacun d'une lame flexible principale 83, 84, 85 et d'une table de translation 86, 87, 88. Les couples sont répartis angulairement autour d'un centre virtuel 89. Les lames flexibles principales 83, 84, 85 sont reliées, chacune, par une première extrémité à une table de translation 86, 87, 88, et par une seconde extrémité à l'élément mobile 90. L'élément mobile 90 a une forme d'anneau. Chaque table de translation 86, 87, 88 est relié à un support fixe 92 par les lames flexibles secondaires, et à une lame flexible principale 83, 84, 85 par la partie rigide.

Dans les modes de réalisation décrits précédemment, les tables de translation sont configurées pour que la ou les lames secondaires soient sensiblement perpendiculaires à la lame flexible principale lorsque le guidage flexible est au repos. Cependant, d'autres variantes de réalisation sont possibles, telles que celles représentées sur les figures 10 à 12, qui peuvent avantageusement remplacer les tables de translation décrites dans les modes de réalisation ci-dessus.

Sur la figure 10, la première variante de table de translation 95 permet de diriger la lame flexible principale 96 selon un angle α différent de 90° par rapport aux lames flexibles secondaires 97. La lame flexible principale 96 est assemblée à la partie rigide 98, en formant un angle α La partie rigide 98 a une forme de coude à deux segments perpendiculaires. Les lames flexibles secondaires 97 relient un premier segment du coude au support 99, tandis que le second segment du coude est joint par la lame flexible principale 96 selon l'angle a. L'angle α.est de préférence compris entre 20° et 80°, voire entre 30 et 60°.

La figure 11 montre une table de translation double 100, comprenant une première partie rigide coudée 104 reliée à la lame flexible principale 101, les lames flexibles secondaires 106 étant reliées à une deuxième partie rigide droite 103. La deuxième partie rigide est reliée au support 102 par deux lames flexibles tertiaires 107. En position de repos, les lames flexibles secondaires 106 et tertiaires 107 sont sensiblement parallèles et sensiblement perpendiculaires à la lame flexible principale 101 grâce à la première partie rigide coudée 104. Les lames secondaires 106 et tertiaires 107 sont jointes à une même face de la seconde partie rigide 103, les lames secondaires 106 étant agencées entre les deux lames tertiaires 107.

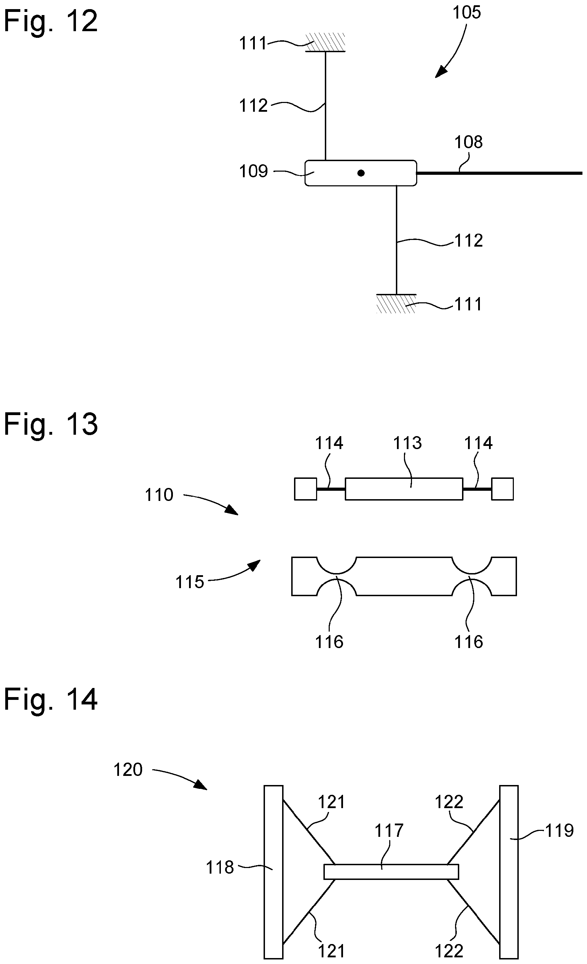

La variante de table de translation 105 de la figure 12 comporte une partie rigide 109 droite. Les deux lames flexibles secondaires 112 sont agencées de part et d'autre de la partie rigide 109, depuis un grand côté de la partie rigide 109 pour la joindre au support 112. La lame flexible principale 108 est jointe à un petit côté de la partie rigide 109.

Sur les figures des différents modes de réalisation de guidage flexibles, les lames flexibles sont des lames plates. Cependant, les lames flexibles peuvent aussi comprendre des parties plus ou moins épaisses, ou comprendre des cols, comme celles représentées sur la figure 13. Ainsi, la lame 110 du haut comprend une partie épaisse 113 au milieu, qui est plus rigide, et des parties plus minces 114 aux extrémités. La lame 115 du bas est épaisse sur toute la longueur, mais comprend deux cols 116 amincis aux extrémités pour permettre à la lame 115 de fléchir.

La figure 14 montre un ensemble flexible 120, qui peut remplacer une ou plusieurs lames flexibles des guidages flexibles décrits précédemment. L'ensemble 120 comprend deux pivots à lames décroisées et une partie rigide 117 centrale. Les pivots à lames décroisées comportent chacun une paire de lames décroisées 121, 122, reliées à la partie rigide 117. La partie rigide 117 est droite, les deux paires de lames décroisées 121, 122, étant agencées chacune à une extrémité de la partie rigide 117. Les lames 121, 122 sont jointes à un élément 118, 119 disposé de part et d'autre de la partie rigide 117. Ces éléments 118, 119 peuvent être un support fixe, un élément mobile, ou un élément intermédiaire d'un guidage flexible tel que décrit précédemment. Les lames 121, 122 d'une paire, sont proches au niveau de la partie rigide 117, et éloignées au niveau des éléments 118, 119.

L'invention se rapporte également à un mécanisme résonateur, notamment pour mouvement d'horlogerie, non représenté sur les figures. Le mécanisme résonateur est muni d'un guidage flexible selon l'un des modes de réalisation décrits ci-dessus.

Naturellement, l'invention n'est pas limitée aux modes de réalisation décrits en référence aux figures et des variantes pourraient être envisagées sans sortir du cadre de l'invention.

On peut notamment imaginer un nombre de couples formés d'une lames flexible principal et d'une table de translation, supérieur ou inférieur aux exemples décrits.

Dans un mode de réalisation alternatif, la ou les tables de translation ne comprennent pas de partie rigide. Ainsi, la ou les lames flexibles secondaires sont jointes par une extrémité à la lame flexible principale, et par une autre extrémité, soit au support fixe, soit à l'élément mobile, soit à la partie centrale. Les lames flexibles secondaires et la lame flexible principale peuvent être jointes directement l'une à l'autre, ou par une partie mince flexible.

## Revendications

1. Guidage flexible (1, 26, 30, 40, 60, 70) pour un mécanisme résonateur rotatif, notamment d'un mouvement d'horlogerie, le guidage (1, 26, 30, 40, 60, 70) comprenant un support fixe (2, 31, 52, 62, 92), un élément mobile (20, 32, 50, 80, 90) par rapport au support fixe (2, 31, 52, 62, 92), au moins une lame flexible principale (3, 4, 5, 36, 37, 38, 42, 43, 44, 45, 61, 63, 64, 65, 66, 67, 68, 69, 83, 84, 85) permettant à l'élément mobile (20, 32, 50, 80, 90) de se déplacer par rapport au support fixe (2, 31, 52, 62, 92) par flexion de la ou des lames flexibles principales (3, 4, 5, 36, 37, 38, 42, 43, 44, 45, 61, 63, 64, 65, 66, 67, 68, 69, 83, 84, 85) dans un mouvement rotatif autour d'un centre de rotation, le guidage flexible (1, 26, 30, 40, 60,70) étant agencé sensiblement dans un plan, **caractérisé en ce qu'**il comprend au moins une table de translation (10, 11, 12, 33, 34, 35, 46, 47, 48, 49, 71, 72, 73, 74, 75, 76, 77, 78, 86, 87, 88) jointe à une extrémité de la lame flexible principale (3, 4, 5, 36, 37, 38, 42, 43, 44, 45, 61, 63, 64, 65, 66, 67, 68, 69, 83, 84, 85), la lame flexible principale (3, 4, 5, 36, 37, 38, 42, 43, 44, 45, 61, 63, 64, 65, 66, 67, 68, 69, 83, 84, 85) et la table de translation (10, 11, 12, 33, 34, 35, 46, 47, 48, 49, 71, 72, 73, 74, 75, 76, 77, 78, 86, 87, 88) formant un couple connecté soit au support fixe (2, 31, 52, 62, 92), soit à l'élément mobile (20, 32, 50, 80, 90), soit à une partie mobile intermédiaire, de sorte que la table de translation (10, 11, 12, 33, 34, 35, 46, 47, 48, 49, 71, 72, 73, 74, 75, 76, 77, 78, 86, 87, 88) soit configurée pour se déplacer en translation au moins en partie sous l'effet de la flexion de la lame flexible principale (3, 4, 5, 36, 37, 38, 42, 43, 44, 45, 61, 63, 64, 65, 66, 67, 68, 69, 83, 84, 85).

2. Guidage flexible selon la revendication 1, **caractérisé en ce qu'**il comprend au moins trois couples, par exemple quatre, chaque couple étant formé d'une lame principale (3, 4, 5, 36, 37, 38, 42, 43, 44, 45, 61, 63, 64, 65, 66, 67, 68, 69, 83, 84, 85) et d'une table de translation (10, 11, 12, 33, 34, 35, 46, 47, 48, 49, 71, 72, 73, 74, 75, 76, 77, 78, 86, 87, 88), les couples étant répartis angulairement de manière à former un pivot symétrique, chaque lame principale (3, 4, 5, 36, 37, 38, 42, 43, 44, 45, 61, 63, 64, 65, 66, 67, 68, 69, 83, 84, 85) étant jointe par une extrémité à une table de translation (10, 11, 12, 33, 34, 35, 46, 47, 48, 49, 71, 72, 73, 74, 75, 76, 77, 78, 86, 87, 88).

3. Guidage flexible selon la revendication 1 ou 2, **caractérisé en ce que** la table de translation (10, 11, 12, 46, 47, 48, 49, 71, 73, 75, 77, 86, 87, 88) est agencée en série entre le support fixe (2, 52, 62, 92) et ladite lame flexible principale (3, 4, 5, 42, 43, 44, 45, 61, 64, 66, 68, 83, 84, 85), la table de translation (10, 11, 12, 46, 47, 48, 49, 71, 73, 75, 77, 86, 87, 88) étant jointe au support fixe (2, 52, 62, 92) et à une première extrémité de la lame flexible principale, la lame flexible principale (3, 4, 5, 42, 43, 44, 45, 61, 64, 66, 68, 83, 84, 85) étant jointe à l'élément mobile (20, 50, 80, 90) par une seconde extrémité.

4. Guidage flexible selon la revendication 1 ou 2, **caractérisé en ce que**, la table de translation (33, 34, 35, 72, 74, 76, 78) est agencée en série entre ladite lame flexible principale (36, 37, 38, 63, 65, 67, 69) et l'élément mobile (32, 80), la table de translation étant jointe à l'élément mobile et à la seconde extrémité de la lame flexible principale (36, 37, 38, 63, 65, 67, 69), la lame flexible principale (36, 37, 38, 63, 65, 67, 69) étant jointe au support fixe (31, 62) par la première extrémité.

5. Guidage flexible selon la revendication 1 ou 2, **caractérisé en ce qu'**il comprend au moins six couples, de préférence huit, chaque couple étant formé d'une lame principale (61, 63, 64, 65, 66, 67, 68, 69) et d'une table de translation (71, 72, 73, 74, 75, 76, 77, 78), les couples étant répartis angulairement autour d'une partie centrale (59), de manière à former un pivot symétrique, chaque lame principale (61, 63, 64, 65, 66, 67, 68, 69) étant jointe par une extrémité à la partie centrale (59), au moins trois couples étant joints au support fixe (62) et au moins trois couples étant joints à l'élément mobile (80) par la table de translation (71, 72, 73, 74, 75, 76, 77, 78).

6. Guidage flexible selon la revendication 5, **caractérisé en ce que** les couples joints au support fixe (62) et les couples joints à l'élément mobile (80) sont répartis alternativement autour de partie centrale (59).

7. Guidage flexible selon la revendication 3, **caractérisé en ce que** l'élément mobile (20, 50) comprend une partie centrale (6, 51) du guidage (1, 26, 40), à laquelle les lames flexibles principales (3, 4, 5, 42, 43, 44, 45) sont jointes.

8. Guidage flexible selon la revendication 4, **caractérisé en ce que** le support fixe (31) comprend une partie centrale (31) du guidage (30), à laquelle les lames flexibles principales (36, 37, 38) sont jointes.

9. Guidage flexible selon la revendication 5 ou 6, **caractérisé en ce qu'**il comprend une partie centrale (59) du guidage (60) formant un élément intermédiaire entre le support (62) et l'élément mobile (80), à laquelle les lames flexibles principales (61, 63, 64, 65, 66, 67, 68, 69) sont jointes.

10. Guidage flexible selon l'une, quelconque, des revendications précédentes, **caractérisé en ce que** la table de translation comprend au moins deux lames flexibles secondaires, les lames flexibles secondaires étant jointes par une extrémité à la lame flexible principale, et par une autre extrémité, soit au support fixe, soit à l'élément mobile, soit à la partie centrale.

11. Guidage flexible selon l'une, quelconque, des revendications 1 à 9, **caractérisé en ce que** la table de translation (10, 11, 12, 33, 34, 35, 46, 47, 48, 49, 71, 72, 73, 74, 75, 76, 77, 78, 86, 87, 88) comprend au moins une lame flexible secondaire et une partie rigide (13, 14, 15), la lame flexible secondaire (7, 8, 9, 27, 28, 29) étant jointe par une extrémité à la partie rigide (13, 14, 15), et par une autre extrémité, soit au support fixe (2, 52, 62, 92), soit à l'élément mobile (32, 80), soit à la partie centrale (59).

12. Guidage flexible selon la revendication 10 ou 11, **caractérisé en ce que** la table de translation (10, 11, 12, 33, 34, 35, 46, 47, 48, 49, 71, 72, 73, 74, 75, 76, 77, 78, 86, 87, 88) comprend deux lames flexibles secondaires (7, 8, 9, 27, 28, 29) jointes à une même face de la partie rigide (13, 14, 15).

13. Guidage flexible selon la revendication 11 ou 12, **caractérisé en ce que** la partie rigide (13, 14, 15) forme un coude, de sorte que la ou les lames flexibles principales (3, 4, 5, 36, 37, 38, 42, 43, 44, 45, 61, 63, 64, 65, 66, 67, 68, 69, 83, 84, 85) soient sensiblement perpendiculaires à la ou aux lames flexibles secondaires (7, 8, 9, 27, 28, 29) de la table de translation (10, 11, 12, 33, 34, 35, 46, 47, 48, 49, 71, 72, 73, 74, 75, 76, 77, 78, 86, 87, 88) jointe à la lame flexible principale (3, 4, 5, 36, 37, 38, 42, 43, 44, 45, 61, 63, 64, 65, 66, 67, 68, 69, 83, 84, 85) en position de repos du guidage (1, 26, 30, 40, 60, 70).

14. Guidage flexible selon l'une, quelconque, des revendications 10 à 13, **caractérisé en ce que** les lames flexibles secondaires (7, 8, 9, 27, 28, 29) sont disposées sur des lignes différentes.

15. Guidage flexible selon la revendication 14, **caractérisé en ce que** les lames flexibles secondaires (7, 8, 9, 27, 28, 29) sont sensiblement parallèles.

16. Guidage flexible selon l'une, quelconque, des revendications précédentes, **caractérisé en ce que** l'élément mobile (20, 32, 50, 80, 90) comprend un balancier (16, 32, 53, 81), qui est par exemple centré sur la partie centrale (6, 51, 59).

17. Mécanisme résonateur rotatif, notamment pour mouvement horloger, **caractérisé en ce qu'**il comprend un guidage flexible (1, 26, 30, 40, 60, 70) selon l'une, quelconque, des revendications précédentes.
